# EUROPEAN PATENT APPLICATION

(11) **EP 1 227 436 A2**
(43) Date of publication of application: **31.07.2002**
(21) Application number: 01204898.9
(22) Date of filing: 13.12.2001
(51) Int. Cl.: G06T 3/40

(54) **Method for zooming digital images**

(30) Priority: 17.01.2001 GB 0101203
(71) Applicant: EASTMAN KODAK COMPANY, Rochester, New York 14650 (US)
(72) Inventor: Murphy, Nicolas Paul, Harrow, Middlesex HA1 4TY (GB)
(74) Representative: Freeman, Avi

(57) **Abstract**

The invention provides a method for processing a first digital image, comprising the steps of mapping pixels corresponding to an edge map of the first digital image to a corresponding edge map in a second digital image using a block based interpolative method, copying pixels corresponding to a smooth region of the first digital image to corresponding positions in the second digital image and, spatially filtering the second digital image to provide information for remaining pixels of the second digital image. The invention provides a method of enlargement in which image portions generated by the block based interpolative method and the spatial filtering are smoothly blended.

## Description

### Field of the Invention

The present invention relates to a method for processing a digital image and in particular to a method and system for enlarging a digital image.

### Background of the Invention

Methods of enlarging digital images have been developed which typically rely on adaptive spatial filtering to perform directional filtering of input data dependent on gradient information within a local neighbourhood within the original image. An example of such a method is disclosed in the article entitled "High-resolution digital resampling using vector rational filters" by Khriji and Cheikh et al, published in the journal Optical-Engineering, volume 38, no. 5, May 1999, pp893 to 901. A problem with the method disclosed in this article and others that rely on adaptive spatial filtering is that the processed image is often soft looking since the filtering process itself blurs out features such as edges that should be maintained. There is therefore a need for a method of enlarging digital images, which is capable of maintaining the sharpness of the original image.

To address this, methods using fractal interpolation, vector quantization and wavelet interpolation have been developed each of which is an example of a block based interpolative method. United States Patent Number 6,141,017 in the name of Iterated Systems Inc., discloses an example of a system that relies upon fractal interpolation. However, fractal interpolation as a method of image processing, in common with currently available vector quantization methods tends to produce artefacts in smooth portions of an interpolated image, which is clearly undesirable. Wavelet interpolation, as disclosed in the article by Zhao-Nailiang entitled "Four-point interpolation for image zooming with edge preservation", published in the proceedings of the SPIE, Vol.3545, pp296-9, tends to produce over sharpened results which is also undesirable.

### Problem to be solved by the Invention

Each of the methods of image processing mentioned above has an associated problem, with spatial filtering smoothing out desired features and the other methods producing over-sharpening of or artefacts in the processed image. There is a need for a method of image processing that overcomes these problems enabling an image to be enlarged whilst maintaining the quality of the image without suffering from the problems mentioned above.

### Summary of the Invention

According to a first aspect of the present invention, there is provided a method for processing a first digital image, comprising the steps of:
mapping pixels corresponding to an edge map of said first digital image to a corresponding edge map in a second digital image using a block based interpolative method;
copying pixels corresponding to a smooth region of said first digital image to corresponding positions in the second digital image; and,
spatially filtering the second digital image to provide information for remaining pixels of said second digital image.

Preferably, the block pased interpolative method is an interpolative vector quantization method. Alternatively, a fractal interpolative method may be used.

Preferably, the method further comprises, prior to the step of mapping pixels corresponding to an edge map of said first digital image to a corresponding edge map in a second digital image using a block based interpolative method, the step of generating an edge map of the first image using an edge detection method.

Preferably, the edge detection method uses a Sobel operator to generate the edge map.

According to a second aspect of the present invention, there is provided a computer program comprising program code means for performing all the steps of the method of the first aspect of the present invention. In one example, the computer program is stored on a computer readable medium such as a CD-ROM or a disk.

According to a third aspect of the present invention, there is provided a computer system arranged to run the method for processing a digital image according to the first aspect of the present invention.

### Advantageous Effect of the Invention

The invention provides a method for processing a digital image in which an edge map of the processed image is generated by a block based interpolative method such as, amongst others, vector quantization or fractal interpolation. Pixels that correspond to a smooth region of the first image are copied from the original image and the remaining pixels of the second image are then completed using a spatial filtering process. The edge map generated by the block based interpolative method is used to generate input data for the spatial filtering and therefore the image portions generated respectively by these two different methods are smoothly blended. The input data to the spatial filtering contains a mixture of pixels copied from the first image and pixels generated by the block based interpolative method. The invention provides a computationally efficient method of obtaining accurate enlarged digital images.

### Brief Description of the Drawings

An example of the present invention will now be described in detail with reference to the accompanying drawings, in which:
Figure 1 is a flow diagram showing the steps in one example of a method according to the present invention;
Figure 2 shows a schematic representation of an array of pixels from a digital image to be enlarged according to the method of the present invention;
Figure 3 shows a schematic representation of an array of pixels from an image enlarged in accordance with the present invention;
Figures 4A to 4C show a schematic representation of steps in the generation an image enlarged in accordance with the method of the present invention; and,
Figure 5 shows a schematic representation of a computer system set up to run the image processing method of the present invention.

### Detailed Description of the Invention

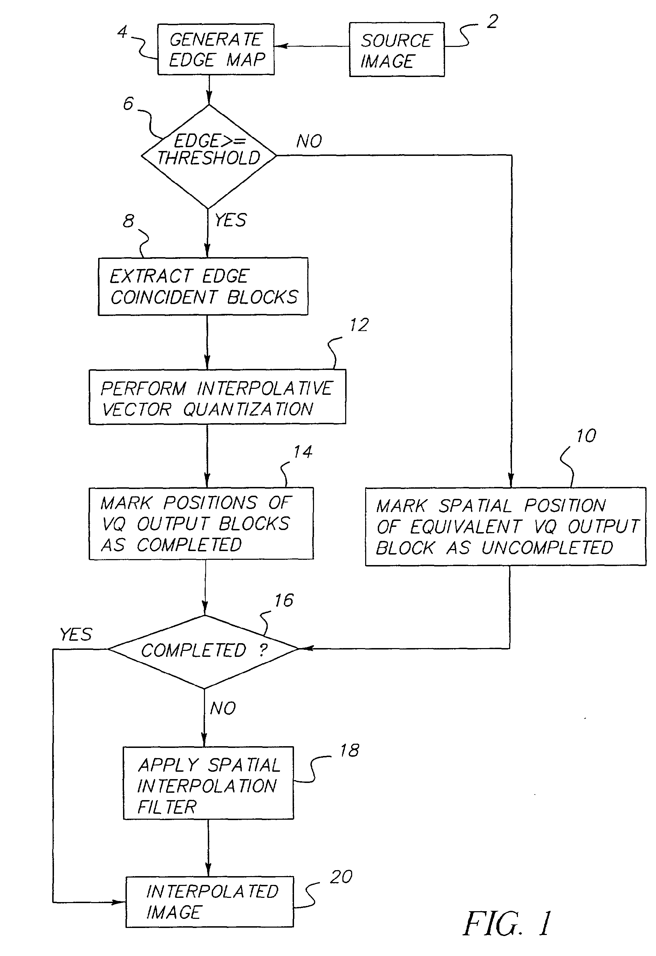

Figure 1 is a flow diagram showing the steps in one example of a method according to the present invention. In this example, the block based interpolative method used is a vector quantization method although other methods such as fractal interpolation could also be used.

As a first step 2, a first digital image that is to be enlarged is taken as input data. Next, at step 4 an edge map of the first image is generated using an edge detection process. Any one of many available edge detection processes may be used such as a Sobel operator. Where a Sobel operator is used, at step 6, the operator sequentially passes through each pixel of the first image determining its gradient magnitude and comparing it to a predetermined threshold level. If the gradient magnitude is below a predetermined threshold, indicating a smooth area of the first image, the method proceeds to step 10 and the pixel is copied to an equivalent location in the output resolution image. The spatial position of the equivalent vector quantization output block is marked as uncompleted and will be processed later. As will be explained below, if it is determined that the gradient magnitude of a particular pixel is equal to or greater than a predetermined threshold and it does therefore include an edge, coincident pixels (i.e. pixels adjacent to the particular pixel) are extracted from the first image at step 8 and an interpolative vector quantization is performed in step 12 using stored codebooks. Weighted values for the interpolated vector quantized blocks are then written to corresponding positions of the output image in step 14 and are marked as completed.

Once all of the edges within the first image have been dealt with in the manner described above, it is determined at step 16 whether the output image is complete. If it is, the process is complete and terminates at step 20. If the output image is not complete any remaining pixels of the second digital image which have not yet had their values set, i.e. those marked as uncompleted in step 10 are interpolated using a spatial filter.

To perform the vector quantization, it is necessary to determine the codebooks of vectors for encoding and decoding. This can be achieved by selecting vector quantization training sequences and obtaining the necessary codebooks from these sequences. The vector quantization training sequences may be selected from a set of images sampled at the resolution of the first image. An interpolator training sequence is composed from equivalent spatially located image blocks from the same set of images, but sampled at the target resolution. Alternatively, the encoder training sequence can be formed from a decimated version of the first image, the interpolator training sequence being generated from equivalent spatially located image neighbourhoods of the first image. The codebooks required for the vector quantization are then obtained from the training sequences using known techniques such as the one disclosed in the article by F Fekri et al entitled "A Generalised Interpolative VQ Method for Jointly Optimal Quantization and Interpolation of Images". This article was published in the proceedings of the 1998 IEEE international conference on Acoustics, Speech and Signal Processing (Cat. No. 98CH36181), IEEE, New York, NY, USA; 1998; 6 Vol. lxiii+3816 pp2657-60 vol. 5.

Since the vector quantization is only performed for pixels of the first image that include an edge, the codebooks required are smaller than those required in conventional vector quantization methods. Thus the method has greater coding efficiency in comparison to a method using a codebook having vectors from all regions of an image.

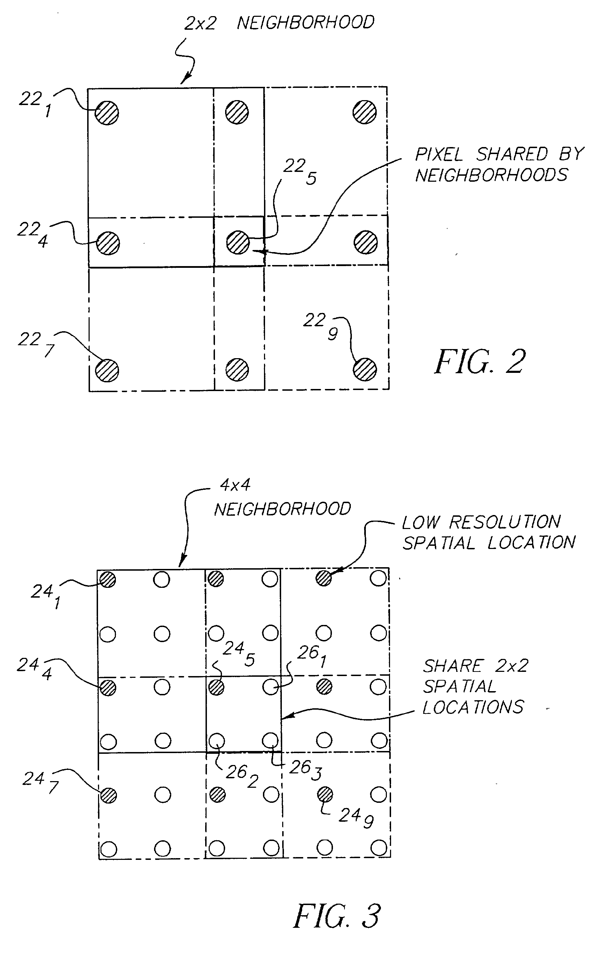

Figures 2 and 3 show respectively a schematic representation of an array of pixels from a first image to be enlarged and an array of pixels from an image enlarged in accordance with the present invention. Referring to Figure 2, an array of 3x3 pixels 22₁ to 22₉ is shown. As explained above, steps 4 and 6 of the method involve the determination of an edge map of the first image by execution of, for example, a Sobel operator on each of the pixels 22₁ to 22₉. In the array shown in Figure 2, if it is determined that an edge exists at pixel number 22₅ at the centre of the array, the method proceeds to step 8 at which the set of overlapping 2x2 blocks having pixel 22₅ as a common element is extracted. The method then proceeds to steps 12 and 14 at which, a vector quantization is performed to determine the additional information required to map the pixels of the original image to corresponding positions in the enlarged image. The vector quantization is performed using the stored codebooks determined in accordance with the method described above.

Figure 3, shows a schematic representation of an array of pixels from an enlarged image. In this case, each of pixels 24₁ to 24₉ corresponds respectively to one of original pixels 22₁ to 22₉ from the first image of Figure 2. The image has been enlarged by a factor of two in each direction due to the additional pixels associated with each of pixels 24₁ to 24₉. For example, pixel 22₅ of the first image is now represented by pixel 24₅ together with additional pixels 26₁ to 26₃, of the output image, pixels 26₁ to 26₃ being obtained from the vector quantization codebooks.

Once the step of mapping and enlarging the edge map has been completed, any unfilled sites in the resultant image are filled by spatial filtering. The spatial filtering is performed using a mixture of the results of the vector quantization and the original image data as the spatial filter's input.

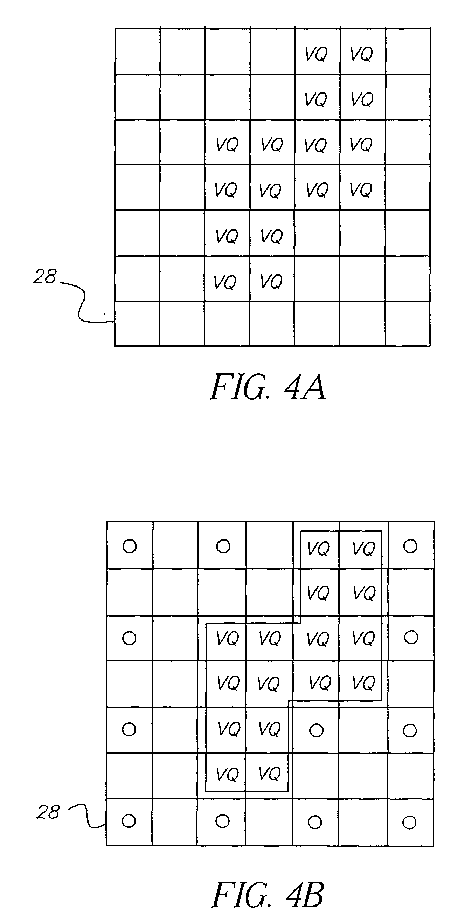

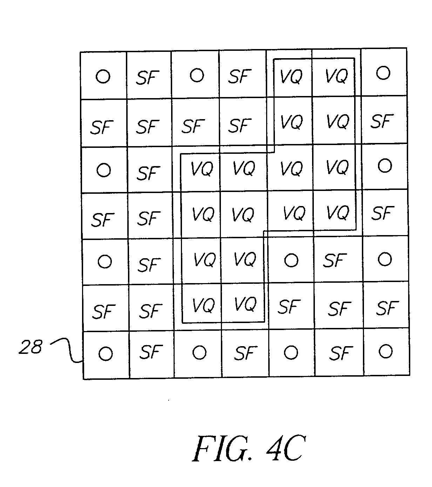

Figures 4A to 4C show the steps in the development of an enlarged image in accordance with the method of the present invention. A grid 28 is shown representing the pixels in the final processed image. In Figure 4A, 2x2 quantized vectors have been mapped into the final image at positions where the corresponding pixel in the first image represented an edge as detected by the edge detection process. In Figure 4B, pixels have been added to the enlarged image that represent those pixels copied from the first image where it was detected that no edge was present. In other words, these pixels represent smooth areas of the first image. Finally, Figure 4C shows the resultant enlarged image. The remaining pixels, unfilled by the mapping of the smooth pixels and the quantized vector transformation are spatially filtered to complete the image. It will be appreciated that the resultant pixels are determined in accordance both with original pixel information from the first image and from pixels determined in accordance with the vector quantization. This ensures that smooth areas in the resultant image are substantially free of artefacts whilst sharp edges in the resultant image are accurately regenerated from the first image information. In addition, this also ensures that the two image portions (generated by vector quantization and spatial filtering respectively) are smoothly blended.

In the example described above, the invention has been described with reference to an array of overlapping 2x2 pixel neighbourhoods. It will be appreciated the invention could be implemented using other sizes of block (e.g. a 4x4 pixel neighbourhood) which need not necessarily overlap with their (or its) immediate neighbours in the image.

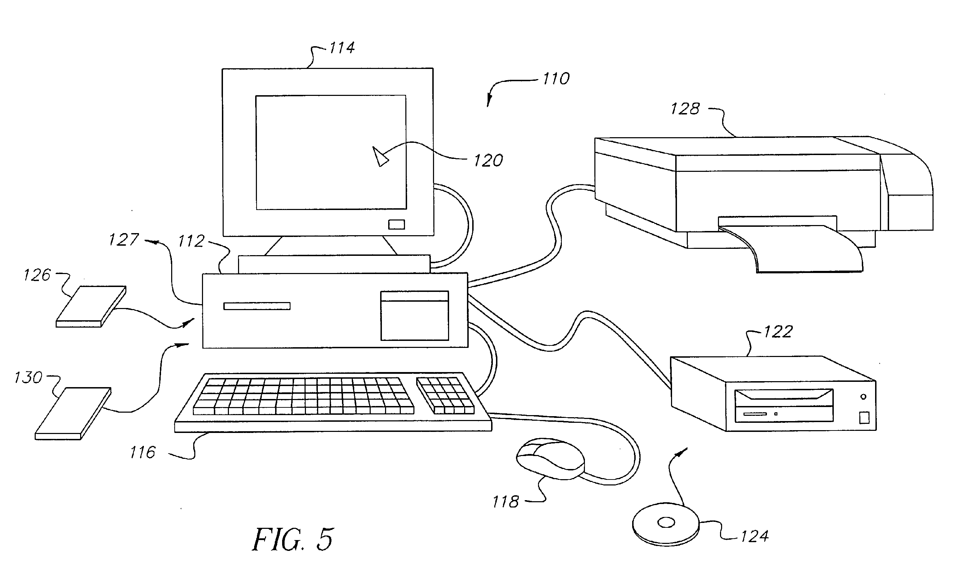

Figure 5 shows a schematic representation of a computer system set up to run the image processing method of the present invention. As will be explained below computer code stored on a computer readable medium such as a CD-ROM, a disk or a ROM arranged to run on a computer or a digital signal processor (DSP) may implement the method of the present invention. Alternatively, the invention can be implemented with an algorithm on a custom ASIC (Application Specific Integrated Circuit).

In the following description, a preferred embodiment of the present invention will be described in terms that would ordinarily be implemented as a software program. Those skilled in the art will readily recognize that the equivalent of such software may also be constructed in hardware. Because image manipulation algorithms and systems are well known, the present description will be directed in particular to algorithms and systems forming part of, or cooperating more directly with, the system and method in accordance with the present invention. Other aspects of such algorithms and systems, and hardware and/or software for producing and otherwise processing the image signals involved therewith, not specifically shown or described herein, may be selected from such systems, algorithms, components and elements known in the art. Given the system as described according to the invention in the following materials, software not specifically shown, suggested or described herein that is useful for implementation of the invention is conventional and within the ordinary skill in such arts.

Still further, as used herein, the computer program may be stored in a computer readable storage medium, which may comprise, for example; magnetic storage media such as a magnetic disk (such as a hard drive or a floppy disk) or magnetic tape; optical storage media such as an optical disc, optical tape, or machine readable bar code; solid state electronic storage devices such as random access memory (RAM), or read only memory (ROM); or any other physical device or medium employed to store a computer program.

Before describing the present invention, it facilitates understanding to note that the present invention is preferably utilized on any well-known computer system, such as a personal computer. Consequently, the computer system will not be discussed in detail herein. It is also instructive to note that the images are either directly input into the computer system (for example by a digital camera) or digitized before input into the computer system (for example by scanning an original, such as a silver halide film).

Referring to Fig. 5, there is illustrated a computer system 110 for implementing the present invention. Although the computer system 110 is shown for the purpose of illustrating a preferred embodiment, the present invention is not limited to the computer system 110 shown, but may be used on any electronic processing system. The computer system 110 includes a microprocessor-based unit 112 for receiving and processing software programs and for performing other processing functions. A display 114 is electrically connected to the microprocessor-based unit 112 for displaying user-related information associated with the software, e.g., by means of a graphical user interface. A keyboard 116 is also connected to the microprocessor based unit 112 for permitting a user to input information to the software. As an alternative to using the keyboard 116 for input, a mouse 118 may be used for moving a selector 120 on the display 114 and for selecting an item on which the selector 120 overlays, as is well known in the art.

A compact disk-read only memory (CD-ROM) 122 is connected to the microprocessor based unit 112 for receiving software programs and for providing a means of inputting the software programs and other information to the microprocessor based unit 112 via a compact disk 124, which typically includes a software program. In addition, a floppy disk 126 may also include a software program, and is inserted into the microprocessor-based unit 112 for inputting the software program. Still further, the microprocessor-based unit 112 may be programmed, as is well known in the art, for storing the software program internally. The microprocessor-based unit 112 may also have a network connection 127, such as a telephone line, to an external network, such as a local area network or the Internet. A printer 128 is connected to the microprocessor-based unit 112 for printing a hardcopy of the output of the computer system 110.

Images may also be displayed on the display 114 via a personal computer card (PC card) 130, such as, as it was formerly known, a PCMCIA card (based on the specifications of the Personal Computer Memory Card International Association) which contains digitized images electronically embodied in the card 130. The PC card 130 is ultimately inserted into the microprocessor based unit 112 for permitting visual display of the image on the display 114. Images may also be input via the compact disk 124, the floppy disk 126, or the network connection 127. Any images stored in the PC card 130, the floppy disk 126 or the compact disk 124, or input through the network connection 127, may have been obtained from a variety of sources, such as a digital camera (not shown) or a scanner (not shown). In accordance with the invention, the algorithm may be stored in any of the storage devices heretofore mentioned and applied in order to process the digital images in accordance with the present invention.

## Claims

1. A method for processing a first digital image, comprising the steps of:
mapping pixels corresponding to an edge map of said first digital image to a corresponding edge map in a second digital image using a block based interpolative method;
copying pixels corresponding to a smooth region of said first digital image to corresponding positions in the second digital image; and,
spatially filtering the second digital image to provide information for remaining pixels of said second digital image.

2. A method according to claim 1, in which the block based interpolative method is an interpolative vector quantization method.

3. A method according to claim 1, in which the block based interpolative method is a fractal interpolative method.

4. A method according to any preceding claim, further comprising, prior to the step of mapping pixels corresponding to an edge map of said first digital image to a corresponding edge map in a second digital image using a block based interpolative method, the step of generating an edge map of the first image using an edge detection method.

5. A method according to claim 4 in which the edge detection method uses a Sobel operator to generate the edge map.

6. A computer program comprising program code means for performing all the steps of any one of claims 1 to 5 when said program is run on a computer.

7. A computer program comprising program code means stored on a computer readable medium for performing the method of any one of claims 1 to 5 when said program is run on a computer.

8. A computer system arranged to run the method for processing a digital image according to any of claims 1 to 5.
